(19) Europäisches Patentamt
European Patent Office
Office européen des brevets

(11)  EP 3 285 595 B1

(12)  **EUROPEAN PATENT SPECIFICATION**

(45) Date of publication and mention
of the grant of the patent:
**05.06.2019  Bulletin 2019/23**

(21) Application number: **16717894.6**

(22) Date of filing: **15.04.2016**

(51) Int Cl.:
*A23G 9/32* *(2006.01)*        *A23G 9/34* *(2006.01)*
*A23G 9/42* *(2006.01)*

(86) International application number:
**PCT/EP2016/058458**

(87) International publication number:
**WO 2016/169866 (27.10.2016 Gazette 2016/43)**

(54) **FROZEN CONFECTION**

GEFRORENE SÜSSWARE

CONFISERIE SURGELÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.04.2015  EP 15164236**

(43) Date of publication of application:
**28.02.2018  Bulletin 2018/09**

(73) Proprietors:
• **Unilever PLC**
**London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**

(72) Inventors:
• **EDARA, Varun**
**3133 AT Vlaardingen (NL)**
• **DA FONSECA SELGAS MARTINS VAN DER
MAATEN, Sara, I.**
**3133 AT Vlaardingen (NL)**
• **WILLIAMSON, Ann-Marie**
**Bedford**
**Bedfordshire MK44 1LQ (GB)**

(74) Representative: **Keenan, Robert Daniel**
**Unilever PLC**
**Unilever Patent Group**
**Colworth House**
**Sharnbrook**
**Bedford**
**Bedfordshire MK44 1LQ (GB)**

(56) References cited:
EP-A1- 1 400 176        EP-A1- 2 196 096
WO-A1-02/082929        WO-A1-2008/003122
WO-A1-2008/046732        WO-A1-2009/075851
US-A1- 2003 185 962        US-A1- 2005 281 932

**Description**

The invention relates to frozen confections such as water ices, fruit ices, sorbets and the like.

Frozen confections such as water ices, fruit ices, sorbets and the like are popular with consumers. A particular characteristic of these products, though, is that they are perceived to have a weak flavour. It has been well established that for 'fat' free products, such as a water ice, there is an initial rapid release of flavour which is not sustained. This creates an overall imbalance in the flavour and may also increase the perception of off-flavours. The main approach currently used by the food industry has been to alter the flavour formulation as a function of product format (for example, water ice, sorbets, ice cream, etc). This has generally required the flavour chemist to develop suitable flavour formulations and the success of this approach is often dependent on the skill and experience of the formulator. This approach also suffers from a number of drawbacks, such as increased complexity, formulating with 'natural' flavours such as strawberry, mango, vanilla etc. which are themselves complex mixtures of components, and how to change the temporal flavour profiles. Controlling flavour release through product structuring seems an appropriate route for low and 'zero' fat products.

One way of introducing flavours into frozen confections is to use an oil-based delivery system in which flavours, which are often partially oil-soluble, are combined with an edible oil that not only acts as a carrier ensuring that the flavour is well distributed throughout the product, but also serves to maintain the performance of the flavour during prolonged periods of storage after product manufacture.

Carbohydrates are widely used in the food industry as sweeteners, thickeners, stabilizers and/or as gelling agents in products such as ice cream, beverages, jellies and sauces. Naknean et al (International Food Research Journal, 17, 23-34 (2010)) describes how polysaccharides influence aroma release through vapour pressure reduction or by influencing mass transfer rate. Complex carbohydrates offer many more possibilities for chemical interaction than simple sugars due to the diversity of functional groups available in complex carbohydrates. In model systems, polysaccharides generally induce a reduction in aroma release caused by an increase in viscosity and/or by molecular interactions with flavour compounds.

WO 2011/131457 A1 (Unilever) discloses a ready-to-drink, packaged non-fermented soy-based beverage having a water content of at least 80 weight percent, a soy protein content of 1.0-8.0 weight percent and a fat content of 0 to 5 weight percent. Said beverage further comprised from 0.01 to 0.4 weight percent of insoluble cellulosic citrus fibres, said beverage having a viscosity of below 0.5 Pas at a shear rate between 2 and 100 s-1, when measured at 5 degrees centigrade. It was surprisingly found that insoluble cellulosic citrus fibres improved flavour, in particular aroma in non-fermented soy-protein containing beverages and in soy-protein containing beverages having a pH in the range of more than 5.5 and less than 8. This was surprising as citrus fibres had been used to impart viscosity, or for structuring purposes in low-fat products like dressings. It was surprisingly that some of the off-flavours (e.g. "soy" and "cereal") of soy protein-containing drinks could be reduced when compared to the same formulations using carboxymethyl cellulose, and that such products had a similar viscosity. The Example beverage consists of soy bean powder (containing about 45 % w/w soy protein), sucrose, calcium lactate, citrus fibres (Herbacel AQ+ Type N from Herbafoods Ingredients GmbH), salt and water.

US 2 858 221 (Laurie-Massey Incorporated) discloses a method for converting waste citrus meats after they have been emptied of their juice into edible food products and food additives. In particular, frozen orange meat (tiny little sacs, cells or pockets which contain the juice) on a stick is disclosed consisting of 1.5 pounds of orange meat pulp, 2 ounces of corn syrup, 4 ounces of cane syrup, 6 ounces of fresh orange juice and 20 drops of single strength orange oil.

US 4 225 628 (Ben Hill Griffin Incorporated) discloses a citrus fiber additive for use in flavoring preparations. Flavor concentrates are usually in the form of oils that must be transformed into some type of dilute emulsion in order to be used in food products. This frequently entails the use of a gum or an emulsifier to get the oil to be dispersed in tiny droplets in water for addition to flour for cake or bread making. The citrus fiber additive serves as a carrier for the oil and eliminates the necessity of preparing an emulsion, and in addition, it provides some flavoring of its own to produce a more natural flavor when the basic flavor is to be orange, lemon, or grapefruit. As a carrier for oily flavor concentrates, the citrus fiber additive can absorb up to about 50 percent of its weight in oil or other liquid flavor concentrate and maintain the character of a dry flour, which is very convenient for use in cake and pastry recipes.

EP 2 196 096 A1 (Nestec SA) discloses a stabiliser system comprising native starch which can be used to impart stability on low-temperature extruded frozen products. By "stabiliser system" is to be understood a mixture of ingredients which contributes to the stability of the frozen product with respect to ice crystal formation, heat shock resistance, overall texture properties etc. The stabiliser system used in the products of the invention preferably further comprises fibres from vegetables, fruits or mixtures thereof. Preferably, the fibres are citrus fibres.

GB 1 458 934 (General Foods Corporation) discloses a frozen aqueous comestible. The dipeptide sweetener APM, that is, L-alpha-aspartyl L-phenylalanine methyl ester is a most attractive sweetening compound having advantages over the more conventional sweeteners. However, the stability afforded is limited. Ester solutions at even an optimum pH reported, namely, 2.0-4.0, undergo a distinct loss in sweetness with or without the decomposition of the ester as measured by the presence of diketopiperazine (DKP) or other decomposition products such as the amino acids, aspartic add and phenylalanine. The invention is founded on the discovery that an aqueous solution of the APM ester in beverage comestibles is stabilized by causing the solution to undergo a gradual temperature reduction to the point where discrete water ice crystals are formed and ultimately the beverage composition is converted into a solid or semi-solid form. The Example discloses a spoonable beverage concentrate comprising cottonseed oil, orange flavor, and orange pulp.

WO 2008/046732 (Unilever et al) discloses a frozen aerated food product having an overrun of at least 30 % comprising 0.001 up to 10 weight-%, based on the total weight of the frozen aerated food product, of surface-active fibres. In ice cream, surface active agents are added to both emulsify the oil phase and also to aerate the product during the shear freezing process. Typically, milk proteins are used as the principal aerating agent. Although ice cream formulations can be readily aerated using conventional equipment, the stability of the air phase is partly dependent on storage temperature. If the ice cream is subject to poor storage or a poor distribution chain where the temperature may warm or fluctuate, this leads to coarsening of the air phase. To the consumer, this can be perceived as a colder eating, more icy, faster melting product which is less desirable. The surface-active agents that are most commonly used in food applications comprise low molecular weight emulsifiers that are primarily based on fatty acid derivatives. Recently, the interest in the study of solid particles as emulsifiers of dispersed systems has been re-awakened. The disadvantage of is that once made, the particles have fixed properties, which might be not always suitable for the specific formulation and applications Surprisingly the inventors found that we can solve this problem by using surface active fibres in frozen aerated products. Such surface active fibres can have the surface activity by their nature or they can be modified to obtain the surface activity. The modification (chemically and/or physically) can be carried out before the fibres are used in the production of the frozen aerated food product and/or it can be carried out during the production of the frozen aerated food product. The surface active fibre can be a fibre, which has the required surface activity (as defined below) by its nature or it can be a modified fibre which is modified by a surface active particle. It is also possible to modify (by a surface active particle) a fibre which is surface active. When the modification takes place during the production of the frozen aerated food product, it is usually achieved by a self assembly process. A self assembly process takes place between two types of components (i) surface active particles, which may or may not have preferable fiber like geometry and (ii) fibers, which might not have surface activity (let say hydrophilic), which then can self-assemble when mixed together due to attractive or sticky interaction between them which are naturally occurring between the particles due to their intrinsic material properties. For example, both types of particles are made from cellulose material, which can form an attractive hydrogen H-bond.

WO 2009/075851 (Cargill Incorporated) discloses a dry blend system comprising citrus pulp fiber; and at least one component selected from the group consisting of hydrocolloids, lipids, carbohydrates, and proteins, wherein the dry blend system is capable of replacing the solids content in a finished food product. Food manufacturers are continuously challenged to find ways to improve various qualities in food systems, such as improving shelf life, improving flavor, reducing calories, replacing commonly known food allergens, and keeping raw material production costs low. To attain these objectives, food manufacturers often endeavor to find substitutes to traditional materials, which can impart these qualities in a better or more efficient manner and/or provide the same qualities at a reduced cost. At the same time, however, the appetizing and authentic nature of the food systems should be sustained. It is also well-known that current processes for making fruit juice, such as citrus fruit juice, employ extractors for separating the juice-containing inner part of the fruit (often referred to as coarse pulp, juice pulp, floating pulp, juice sacs, or pulp fibers) from its outer peel. These processes produce certain waste fruit materials, such as pulp fibers and peels. For many years, problems with the disposal of waste fruit material have prompted attempts to utilize this resource. In situations where lipids also act as emulsifiers, the disclosed dry blend system can be useful as a lipid (emulsifier) substitute, without compromising desirable properties.

In an aspect, the disclosed dry blend system can also demonstrate synergy with lipids such as lecithin, such that the combined total effect in a food system is greater than the sum of the effect of the lipid alone or the dry blend system devoid of the lipid in a food system. For example, a dry blend system comprising citrus pulp fiber and at least one lipid can be used in a food system such as an ice cream system, wherein the citrus pulp fiber and lipid synergistically act to improve functionality including, but not limited to, emulsion stability, increased oil binding capacity, and the like. Example 3 discloses an ice cream system comprising citrus pulp fibre and cream.

**Summary of the Invention**

It has been observed by the inventors, using Proton Transfer Reaction - Mass Spectrometry (PTR-MS), that a water ice comprising 2 % w/w sunflower oil and 0.7 % w/w citrus fibre prepared using a high speed stirrer operated at 6000 rpm exhibited a synergistic up-regulation in real time flavor release in-vivo with flavor compounds with fruity perceptions such as the esters ethyl hexanoate, ethyl butyrate and ethyl octanoate when compared to water ices comprising either 2 % w/w sunflower oil or 0.7 % w/w citrus fibre prepared in the same way.

The inventors have also observed, using a time intensity sensorial evaluation method, that a water ice comprising 2 % w/w sunflower oil, 0.7 % w/w citrus fibre and 0.015 % ethyl butyrate (log P 1.8) prepared using a homogeniser operated at 600 bar gauge exhibited a significant increase in perceived flavor intensity and a longer lasting flavor perception when compared to control water ices comprising either no sunflower oil and citrus fibre, 0.7 % w/w citrus fibres, or 2 % w/w sunflower oil. Similar results were seen when sugar cane fibre was substituted for citrus fibre.

Thus the invention provides a frozen confection comprising:

(a) 0.001 to 6, preferably 0.01 to 2, most preferably 0.1 to 2 % w/w edible oil with a melting temperature of -40 to 20, preferably -40 to 10 degrees centigrade;
(b) 0.01 to 2.0, preferably 0.1 to 1 % w/w plant fibre;
(c) 1 to 30, preferably 2 to 25 % w/w freezing point depressant;
(d) 0.001 to 5, preferably 0.001 to 2, most preferably 0.001 to 0.5 % w/w one or more flavours; and

wherein the frozen confection has an overrun of 5 to 200, preferably 5 to 100, most preferably 5 to 50 %,
wherein the preparation of the frozen confection comprises an homogenisation step,
wherein the plant fibre comprises:

at least 50, preferably at least 70 % w/w cellulose and hemicellulose;
5-30, preferably 5-20 % w/w pectin;
and less than 5 % w/w lignin,

wherein the plant fibre has a water binding capacity before the homogenisation step of more than 800 % by weight and after the homogenization step of more than 1000, preferably more than 2000, more preferably more than 3000 % by weight.

Overrun is defined by the equation below and is measured at atmospheric pressure:

$$Overrun\ (\%) = \frac{(Density\ of\ mix) - (Density\ of\ frozen\ confection)}{(Density\ of\ frozen\ confection)}$$

A water binding capacity of 1000 % by weight means that the plant fibre can hold 10 times its own weight water. The water binding capacity of the plant fibres is expressed as the weight of fibre with bound water (g) / dry weight of fibre (g) and was measured by:

(a) Diluting 1 g of fibre in 50 g liquid water in a Falcon centrifugal tube;
(b) Dispersing the fibre for 5 minutes using a IKA minishaker at 2500 rpm;
(c) Incubating the dispersed fibre for 24 hours at room temperature;
(d) Centrifuging the fibres at 4500 rpm for 10 minutes;
(e) Removing the supernatant and weighing the sediment fibre with bound water.

## Detailed Description of the Invention

Preferably the plant fibre has a moisture content of less than 10 % w/w.
The plant fibre is citrus fibre or sugar cane fibre.
Preferably the one or more flavours has a log P $\leq$ 4.0, preferably $\leq$ 3.0. Preferably the one or more flavours has a log P $\geq$ 1.0.
The term "log P" is the partition coefficient at 20 degrees centigrade and means, for the purposes of this specification:

$$log\left(\frac{[solute]_{octanol}}{[solute]_{deionised\ water}}\right)$$

The edible oil may be selected from the group consisting of sunflower oil, rapeseed oil, fish oil, cottonseed oil, flaxseed oil, walnut oil, hempseed oil, almond oil, olive oil, safflower oil, soybean oil, peanut oil, corn oil, grape seed oil, canola oil and mixtures thereof.
Preferably the frozen confection comprises $\geq$ 55, preferably $\geq$ 60 % w/w ice. Preferably the frozen confection comprises $\leq$ 80, preferably $\leq$ 75 % w/w ice.
The ice content of the frozen confections of the invention is calculated from the colligative freezing point depression of low molecular weight molecules present in the formulation. Preferably the freezing point depressants are selected from the group consisting of monosaccharides, disaccharides, oligosaccharides, sugar alcohols, salts and mixtures thereof. Most preferably the freezing point depressants are selected from the group consisting of monosaccharides, disaccharides, oligosaccharides containing from 3 to 10 monosaccharide monomers, erythritol, arabitol, glycerol, xylitol, sorbitol, mannitol, lactitol, malitol and mixtures thereof.

Preferably the frozen confection is in the form of any one of a milk ice, water ice and sorbet.

Preferably, the frozen confection is in the form of a moulded product.

The frozen confection may additionally comprise 0.1 to 7, preferably 1 to 7 % w/w protein, preferably milk protein. The frozen confection may also additionally comprise an emulsifier at an edible oil: emulsifier weight ratio of 40:1 to 10:1. Preferably the frozen confection also additionally comprises at least one stabilizer selected from the group consisting of locust bean gum, xanthan, guar gum, carrageenan, starch, and mixtures thereof.

**Example 1:**

**Real time flavour release in-vivo assessment**

Herbacel AQ+ citrus fibre (Herbafood Ingredients GmbH)
Glucose 28 DE (Cargill)
Sucrose ester S1670 (Ryoto)

Water ice solutions were prepared with 16.5 % w/w sugar, 5.5 % w/w glucose, 0.2 % w/w locust bean gum, 0.2 % w/w citric acid and varying amounts of citrus fibre (0, 0.7 and 2 % w/w) and sunflower oil (0, 2 and 5 % w/w). Sucrose ester was used as an emulsifier at a weight ratio of oil : emulsifier of 20:1. The solutions were homogenized using a high speed stirrer at 6000 rpm at atmospheric pressure. A flavour compound was added at a concentration of 0.015 % w/w to the solutions after homogenisation. The solutions were then frozen to -20 °C in a blast freezer and subsequently stored at -18 °C until required for testing. Flavour compounds were selected from ethyl heaxanoate, ethyl butyrate, and ethyl octanoate.

In-vivo flavour release measurements were conducted on 6 g test samples to measure the flavour area under the curve (AUC) by proton transfer reaction mass spectroscopy (PTR-QMS 400, Ionicon) (PTR-MS). PTR-MS is a direct mass spectrometric soft ionisation method based on gas phase proton transfer with protonated water. This method can be used for real time measurement providing an instant response to concentration changes and data points being collected every few milliseconds. A heated nose piece enables measurement of the volatile aroma compounds released in breath via the nose of 4 panelists. The intensity of the response for each flavour compound mass fragment was measured over time and the area under the curve calculated.

**Results**

The results are presented in the form of normalised (to control) area under the curve (AUC) and summarized in Table 1, from which it is clear that the addition of 2 % w/w sunflower oil to the water ice formulation improved the flavor release by a factor of approximately 1.5. Similarly the addition of 0.5 or 0.7 % w/w citrus fiber alone also increased the total AUC by the same order of magnitude as for the sunflower oil. Surprisingly the combination of citrus fiber and sunflower oil increased the normalized AUC by a factor of more than 2.5.

Table 1: Normalized in-vivo flavor release area under curve (AUC) of citrus fibre and sunflower containing water ices with various flavour compounds. N = 4.

| Water ice | Flavour compound | Log P [flavour compounds] | AUC (normalized) |
|---|---|---|---|
| - (Control) | Ethyl hexanoate | 2.83 | 1.00 |
| 2 % w/w sunflower oil | Ethyl hexanoate | 2.83 | 1.62 |
| 0.5 % w/w citrus fibre | Ethyl hexanoate | 2.83 | 1.92 |
| 0.7 % w/w citrus fibre | Ethyl hexanoate | 2.83 | 1.72 |
| 2 % w/w sunflower oil + 0.7 % w/w citrus fibre | Ethyl hexanoate | 2.83 | 2.66 |
| | | | |

(continued)

| Water ice | Flavour compound | Log P [flavour compounds] | AUC (normalized) |
|---|---|---|---|
| - (Control) | Ethyl butyrate | 1.8 | 1.00 |
| 2 % w/w sunflower oil | Ethyl butyrate | 1.8 | 1.21 |
| 0.7 % w/w citrus fibre | Ethyl butyrate | 1.8 | 1.48 |
| 2 % w/w sunflower oil + 0.7 % w/w citrus fibre | Ethyl butyrate | 1.8 | 1.51 |
|  |  |  |  |
| - (Control) | Ethyl octanoate | 3.8 | 1.00 |
| 2 % w/w sunflower oil | Ethyl octanoate | 3.8 | 2.10 |
| 0.7 % w/w citrus fibre | Ethyl octanoate | 3.8 | 2.03 |
| 2 % w/w sunflower oil + 0.7 % w/w citrus fibre | Ethyl octanoate | 3.8 | 2.69 |

Similar results were seen with other flavour compounds. The results seem to indicate that the observed benefit is more evident for flavour compounds with log P < 3. The differences between ethyl hexanoate (log P 2.83) and ethyl octanoate (log P 3.8) are small when compared with ethyl butyrate (log P 1.8).

**Conclusion**

Overall, the total flavour release (AUC) measured in-vivo was higher when sunflower oil was in combination with citrus fibers, rather than when each was added alone. A synergistic effect by these two ingredients is observed with different flavour compounds and the increase in synergistic benefit is more pronounced when the log P of the flavor compounds $\leq 3$.

**Example 2**

**Time intensity sensorial evaluation**

Sugar cane fibre (Watson)

Water ices were prepared as described in Example 1 but initially using a high speed stirrer at 600 rpm and then by passing the samples through a bench scale homogenizer set to 600 bar pressure. The flavour compound was ethyl butyrate used at a concentration of 0.015 % w/w.
The time Intensity methodology is a method of sensory profiling that measures how an individual attribute changes in time, in this case flavour intensity was measured. The data was recorded using the FIZZ sensory data capture system (Fizz, software Biosystemes, Couternon, France). The system records two measures per second over 180 seconds. Three parameters were calculated from the data, namely:

- FirstNil (the length of time during which the flavour is perceived (lingering effect))
- FirstMax50 (the length of time to 50 % of the Maxvalue (boost effect))
- MaxValue (maximum flavour intensity)

Having obtained the parameters of interest for all the complete curves, the next step is to standardize these values so that each parameter has mean zero and unit standard deviation, for each panellist. This is done in order to overcome the problem that different panellists can have vastly different basic shapes to their time intensity curves. Some panellists may always have relatively low maximum values no matter what product they are testing, others may always have relatively short time spans. By standardising the curves within a panellist the effects of the differences in basic shape are reduced.
Due to the possible occurrence of incomplete curves and also because the achieved design may be incomplete, a further step is needed. This is to estimate the standardised parameter values for any curves missing from the complete design, by fitting an ANOVA model to the standardised values and obtaining estimated values for the missing curves.

The complete data (i.e. standardised data plus the predicted values) are then re-standardised to give mean zero and unit standard deviation for each parameter for each panellist. Only the re-standardised data for those curves which were originally non-missing are used in the analysis.

16 panellists put a 6 gram test sample in their mouth and tasted and swallowed the product. They were asked to score continuously during 3 minutes on the intensity of the flavour on a continuous line scale from 0 - 100. The test samples were tested in random order in triplicate. The samples were measured under red light condition and served at -18 °C. To clean their palate, cream crackers and tap water were used. There was a four minute break between each test sample.

A sixteen point scale of intensity using reference standards, available to the panellists at all times was used comprising citric acid solutions at 0.16, 0.32, 0.48, 0.64 and 0.80 g/L corresponding to scores of 2, 5, 8, 11 and 14 on the scale.

## Results

The results are presented in Table 2 from which it is clear that for the combination of citrus fibre and sunflower oil, the addition of sunflower oil alone did not show any significance differences when compared against the Control. The addition of citrus fibre alone slowed down the speed of release (increased the FirstMax50), increased the lingering effect (FirstNil) significantly when compared against the Control, but did not improve the perceived intensity of the flavour (MaxValue). In contrast, the combination of sunflower oil and citrus fiber showed an increase of speed of release compared to citrus fiber alone (lower FirstMax50), improved the lingering effect although not significantly (FirstNil), and increased the MaxValue significantly.

For the combination of sugar cane fibre and sunflower oil, the addition of sugar cane fiber alone slowed down the speed of release (increased the FirstMax50), increased slightly the lingering effect (FirstNil), and did not intensify the flavour perception (MaxValue). On addition of sunflower oil to the sugar cane fiber the speed of release remained the same, the lingering effect improved (from 0.0617 to more than 0.3912) and the MaxValue again increased significantly.

Table 2: Time intensity sensorial evaluation of the flavour intensity of water ices. FirstNil is indicative of a long-lasting flavour. MaxValue and FirstMax50 are together indicative of a more intense flavor. n = 48. Different letters indicate significant difference ($p < 0.05$).

|  | FirstNil | MaxValue | FirstMax50 |
|---|---|---|---|
| - (Control) | -0.5841 b | -0.4809 b | -0.2920 c |
| 2 % w/w sunflower oil | -0.4723 b | -0.0428 b | -0.5112 c |
| 0.7 % w/w citrus fibre | 0.4881 a | -0.0832 b | 0.6205 a |
| 2 % w/w sunflower oil + 0.7 % w/w citrus fibre | 0.5684 a | 0.6068 a | 0.1826 b |
|  |  |  |  |
| - (Control) | -0.9160 b | -0.4570 b | -0.6592 b |
| 0.7 % w/w sugar cane fibre | 0.0617 a | -0.0156 b | 0.2371 a |
| 2 % w/w sunflower oil + 0.7 % w/w citrus fibre | 0.3912 a | 0.1872 a | 0.2832 a |

## Conclusions

The sensorial evaluation results for the combination of citrus fibre and sunflower oil validated the real time flavour release in-vivo measurements. A similar synergy between sugar cane fibre and sunflower oil was observed on the perception of flavor intensity.

## Claims

1. A frozen confection comprising:

(a) 0.001 to 6, preferably 0.01 to 2, most preferably 0.1 to 2 % w/w edible oil with a melting temperature of -40 to 20, preferably -40 to 10 degrees centigrade;
(b) 0.01 to 2.0, preferably 0.1 to 1 % w/w plant fibre;
(c) 1 to 30, preferably 2 to 25 % w/w freezing point depressant;
(d) 0.001 to 5, preferably 0.001 to 2, most preferably 0.001 to 0.5 % w/w one or more flavours; and

wherein the frozen confection has an overrun of 5 to 200, preferably 5 to 100, most preferably 5 to 50 %,
wherein the preparation of the frozen confection comprises an homogenization step, wherein the plant fibre comprises:

at least 50, preferably at least 70 % w/w cellulose and hemicellulose;
5-30, preferably 5-20 % w/w pectin;
and less than 5 % w/w lignin,
wherein the plant fibre has a water binding capacity before the homogenisation step of more than 800 % by weight and after the homogenisation step of more than 1000, preferably more than 2000, more preferably more than 3000 % by weight.

2. A frozen confection according to claim 1, wherein the plant fibre is citrus fibre or sugar cane fibre.

3. A frozen confection according to claim 1 or claim 2, wherein the one or more flavours has a log P ≤ 4.0, preferably ≤ 3.0.

4. A frozen confection according to any one of claims 1 to 3, wherein the one or more flavours has a log P ≥ 1.0.

5. A frozen confection according to any one of claims 1 to 4, wherein the edible oil is selected from the group consisting of sunflower oil, rapeseed oil, fish oil, cottonseed oil, flaxseed oil, walnut oil, hempseed oil, almond oil, olive oil, safflower oil, soybean oil, peanut oil, corn oil, grape seed oil, canola oil and mixtures thereof.

6. A frozen confection according to any one of claims 1 to 5 comprising ≥ 55, preferably ≥ 60 % w/w ice.

7. A frozen confection according to any one of claims 1 to 6 comprising ≤ 80, preferably ≤ 75 % w/w ice.

8. A frozen confection according to any one of claims 1 to 7 in the form of any one of a milk ice, water ice and sorbet.

9. A frozen confection according to any one of claims 1 to 8 in the form of a moulded product.

10. A frozen confection according to any one of claims 1 to 9, additionally comprising 0.1 to 7, preferably 1 to 7 % w/w protein, preferably milk protein.

11. A frozen confection according to any one of claims 1 to 10, additionally comprising an emulsifier at an edible oil: emulsifier weight ratio of 40:1 to 10:1.

12. A frozen confection according to any one of claims 1 to 11, additionally comprising at least one stabilizer selected from the group consisting of locust bean gum, xanthan, guar gum, carrageenan, starch, and mixtures thereof.

13. A frozen confection according to any one of claims 1 to 12, wherein the freezing point depressant is selected from the group consisting of monosaccharides, disaccharides, oligosaccharides, sugar alcohols, salts and mixtures thereof.

14. A frozen confection according to claim 13 wherein the freezing point depressant is selected from the group consisting of monosaccharides, disaccharides, oligosaccharides containing from 3 to 10 monosaccharide monomers, erythritol, arabitol, glycerol, xylitol, sorbitol, mannitol, lactitol, malitol and mixtures thereof.

**Patentansprüche**

1. Gefrorenes Konfekt, umfassend:

(a) 0,001 bis 6, vorzugsweise 0,01 bis 2, höchst bevorzugt 0,1 bis 2 Gew.-% Speiseöl einer Schmelztemperatur von -40 bis 20, vorzugsweise -40 bis 10 Grad Celsius;
(b) 0,01 bis 2,0, vorzugsweise 0,1 bis 1 Gew.-% Pflanzenfaser;
(c) 1 bis 30, vorzugsweise 2 bis 25 Gew.-% Gefrierpunkterniedriger;
(d) 0,001 bis 5, vorzugsweise 0,001 bis 2, höchst bevorzugt 0,001 bis 0,5 Gew.-% eines oder mehrerer Geschmacksstoffe, und

wobei das gefrorene Konfekt einen Überlauf von 5 bis 200, vorzugsweise von 5 bis 100, höchst bevorzugt von 5 bis 50% aufweist,
wobei die Herstellung des gefrorenen Konfekts einen Homogenisierungsschritt umfasst,
wobei die Pflanzenfaser umfasst:

mindestens 50, vorzugsweise mindestens 70 Gew.-% Cellulose und Hemicellulose; 5-30, vorzugsweise 5-20 Gew.-% Pectin;
und weniger als 5 Gew.-% Lignin,
wobei die Pflanzenfaser eine Wasserbindungskapazität vor dem Homogenisierungsschritt von mehr als 800 Gewichts-% und nach dem Homogenisierungsschritt von mehr als 1000, vorzugsweise von mehr als 2000, höchst bevorzugt von mehr als 3000 Gewichts-%, aufweist.

2. Gefrorenes Konfekt nach Anspruch 1, wobei die Pflanzenfaser eine Citrusfaser oder eine Zuckerrohrfaser ist.

3. Gefrorenes Konfekt nach Anspruch 1 oder Anspruch 2, wobei der eine oder die mehreren Geschmacksstoffe eine log P ≤ 4,0, vorzugsweise ≤ 3,0 aufweisen.

4. Gefrorenes Konfekt nach irgendeinem der Ansprüche 1 bis 3, wobei der eine oder die mehreren Geschmacksstoffe einen log P ≥ 1,0 aufweist/aufweisen.

5. Gefrorenes Konfekt nach irgendeinem der Ansprüche 1 bis 4, wobei das Speiseöl aus der Gruppe ausgewählt ist, die aus Sonnenblumenöl, Rapsöl, Fischöl, Baumwollsamenöl, Leinsamenöl, Walnussöl, Hanföl, Mandelöl, Olivenöl, Safloröl, Sojaöl, Erdnussöl, Maisöl, Traubenkernöl, Canolaöl und Mischungen davon besteht.

6. Gefrorenes Konfekt nach irgendeinem der Ansprüche 1 bis 5, umfassend ≥ 55, vorzugsweise ≥ 60 Gew.-% Eis.

7. Gefrorenes Konfekt nach irgendeinem der Ansprüche 1 bis 6, umfassend ≤ 80, vorzugsweise ≤ 75 Gew.-% Eis.

8. Gefrorenes Konfekt nach irgendeinem der Ansprüche 1 bis 7 in Form eines oder mehrere von Milcheis, Wassereis und Sorbet.

9. Gefrorenes Konfekt nach irgendeinem der Ansprüche 1 bis 8 in Form eines geformten Produktes.

10. Gefrorenes Konfekt nach irgendeinem der Ansprüche 1 bis 9, das zusätzlich 0,1 bis 7, vorzugsweise 1 bis 7 Gew.-% Protein, vorzugsweise Milchprotein, umfasst.

11. Gefrorenes Konfekt nach irgendeinem der Ansprüche 1 bis 10, das zusätzlich einen Emulgator bei einem Speiseöl:Emulgator-Gewichtsverhältnis von 40:1 bis 10:1 umfasst.

12. Gefrorenes Konfekt nach irgendeinem der Ansprüche 1 bis 11, das zusätzlich mindestens einen Stabilisator enthält, der aus der Gruppe, die aus Johannesbrotgummi, Xanthan, Guargummi, Carrageen, Stärke und Mischungen davon besteht, ausgewählt ist.

13. Gefrorenes Konfekt nach irgendeinem der Ansprüche 1 bis 12, wobei der Gefrierpunkterniedriger aus der Gruppe, die aus Monosacchariden, Disacchariden, Oligosacchariden, Zuckeralkoholen, Salzen und Mischungen davon besteht, ausgewählt ist.

14. Gefrorenes Konfekt nach Anspruch 13, wobei der Gefrierpunkterniedriger aus der Gruppe, die aus Monosacchariden, Disacchariden, Oligosacchariden, die 3 bis 10 Monosaccharid-Monomere enthalten, Erythrit, Arabit, Glycerin, Xylit, Sorbit, Mannit, Lactit, Malit und Mischungen davon besteht, ausgewählt ist.

**Revendications**

1. Confiserie congelée comprenant :

   (a) de 0,001 à 6, de préférence de 0,01 à 2, encore mieux de 0,1 à 2 % en masse/masse d'huile comestible avec une température de fusion de -40 à 20, de préférence de -40 à 10 degrés centigrade ;
   (b) de 0,01 à 2,0, de préférence de 0,1 à 1 % en masse/masse de fibre de plante ;
   (c) de 1 à 30, de préférence de 2 à 25 % en masse/masse d'abaisseur du point de congélation ;
   (d) de 0,001 à 5, de préférence de 0,001 à 2, encore mieux de 0,001 à 0,5 % en masse/masse d'un ou plusieurs arômes ; et

   dans laquelle la confiserie congelée présente un dépassement de 5 à 200, de préférence de 5 à 100, encore mieux de 5 à 50 %,
   dans laquelle la préparation de la confiserie congelée comprend une étape d'homogénéisation,
   dans laquelle la fibre de plante comprend :

   au moins 50, de préférence au moins 70 % en masse/masse de cellulose et d'hémicellulose ;
   5-30, de préférence 5-20 % en masse/masse de pectine ;
   et moins de 5 % en masse/masse de lignine,

   dans laquelle la fibre de plante présente une capacité de liaison à l'eau avant l'étape d'homogénéisation supérieure à 800 % en masse et après l'étape d'homogénéisation supérieure à 1 000, de préférence supérieure à 2 000, encore mieux supérieure à 3 000 % en masse.

2. Confiserie congelée selon la revendication 1, dans laquelle la fibre de plante est une fibre d'agrume ou une fibre de canne à sucre.

3. Confiserie congelée selon la revendication 1 ou la revendication 2, dans laquelle les un ou plusieurs arômes présentent un log P $\leq$ 4,0, de préférence $\leq$ 3,0.

4. Confiserie congelée selon l'une quelconque des revendications 1 à 3, dans laquelle les un ou plusieurs arômes présentent un log P $\geq$ 1,0.

5. Confiserie congelée selon l'une quelconque des revendications 1 à 4, dans laquelle l'huile comestible est choisie dans le groupe consistant en huile de tournesol, huile de colza, huile de poisson, huile de graine de coton, huile de graine de lin, huile de noix, huile de chanvre, huile d'amande, huile d'olive, huile de carthame, huile de soja, huile d'arachide, huile de maïs, huile de pépins de raisin, huile de canola et mélanges de celles-ci.

6. Confiserie congelée selon l'une quelconque des revendications 1 à 5 comprenant $\geq$ 55, de préférence $\geq$ 60 % en masse/masse de glace.

7. Confiserie congelée selon l'une quelconque des revendications 1 à 6 comprenant $\leq$ 80, de préférence $\leq$ 75 % en masse/masse de glace.

8. Confiserie congelée selon l'une quelconque des revendications 1 à 7 dans la forme de l'une quelconque d'une glace au lait, glace à l'eau et sorbet.

9. Confiserie congelée selon l'une quelconque des revendications 1 à 8 dans la forme d'un produit moulé.

10. Confiserie congelée selon l'une quelconque des revendications 1 à 9, comprenant de plus de 0,1 à 7, de préférence de 1 à 7 % en masse/masse de protéine, de préférence protéine de lait.

11. Confiserie congelée selon l'une quelconque des revendications 1 à 10, comprenant de plus un émulsionnant à un rapport massique huile comestible : émulsionnant de 40:1 à 10:1.

12. Confiserie congelée selon l'une quelconque des revendications 1 à 11, comprenant de plus au moins un stabilisant choisi dans le groupe consistant en gomme de caroube, xanthane, gomme guar, carraghénane, amidon, et mélanges de ceux-ci.

**13.** Confiserie congelée selon l'une quelconque des revendications 1 à 12, dans lequel l'abaisseur du point de congélation est choisi dans le groupe consistant en monosaccharides, disaccharides, oligosaccharides, alcools de sucre, sels et mélanges de ceux-ci.

**14.** Confiserie congelée selon la revendication 13, dans laquelle l'abaisseur du point de congélation est choisi dans le groupe consistant en monosaccharides, disaccharides, oligosaccharides contenant de 3 à 10 monomères de monosaccharides, érythritol, arabitol, glycérol, xylitol, sorbitol, mannitol, lactitol, malitol et mélanges de ceux-ci.

# EP 3 285 595 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011131457 A1, Unilever
- US 2858221 A
- US 4225628 A
- EP 2196096 A1
- GB 1458934 A
- WO 2008046732 A, Unilever
- WO 2009075851 A

### Non-patent literature cited in the description

- **NAKNEAN et al.** *International Food Research Journal,* 2010, vol. 17, 23-34